# FASCICULE DE BREVET EUROPEEN

(11) **EP 2 168 304 B1**
(45) Date de publication et mention de la délivrance du brevet: **20.02.2019**
(21) Numéro de dépôt: 08826503.8
(22) Date de dépôt: 08.07.2008
(51) Int. Cl.: H04L 9/32, H04L 9/06

(54) **VERIFICATION DE CODE MAC SANS REVELATION**
VERIFIKATION EINES MAC-CODES OHNE DESSEN OFFENLEGUNG
VERIFICATION OF MAC CODE WITHOUT DISCLOSURE

(30) Priorité: 13.07.2007 FR 0705095
(43) Date de publication de la demande: 31.03.2010
(73) Titulaire: Viaccess, 92057 Paris La Défense Cedex (FR)
(72) Inventeur: CHIEZE, Quentin, F-75009 Paris (FR); LEPORINI, David, F-94150 Rungis (FR)
(74) Mandataire: Cabinet Plasseraud
(86) Numéro de dépôt international: PCT/FR2008/051278
(87) Numéro de publication internationale: WO 2009/013420

(56) Documents cités:
- US-A1- 2002 071 552
- B.PRENEEL: "Cryptanalysis of Message Authentication Codes"[Online] 15 septembre 2004 (2004-09-15), pages 1-10, XP002475041 Extrait de l'Internet: URL:http://www.google.de/search?hl=de&q=cr yptanalysis+of+message+authentication+code s&btnG=Google-Suche&meta=> [extrait le 2008-04-04]
- BRUCE SCHNEIER ED - SCHNEIER B: "Applied Cryptography" APPLIED CRYPTOGRAPHY. PROTOCOLS, ALGORITHMS, AND SOURCE CODE IN C, NEW YORK, NY : JOHN WILEY & SONS, US, 1996, pages 157-159, XP002475042 ISBN: 0-471-11709-9

## Description

### Domaine technique

La présente invention est relative à la sécurité des messages échangés entre entités distantes, notamment à la vérification de l'authenticité et/ou de l'intégrité de tels messages. Elle s'applique avantageusement mais non limitativement au domaine de l'accès à des contenus multimédia protégés.

### Etat de l'art

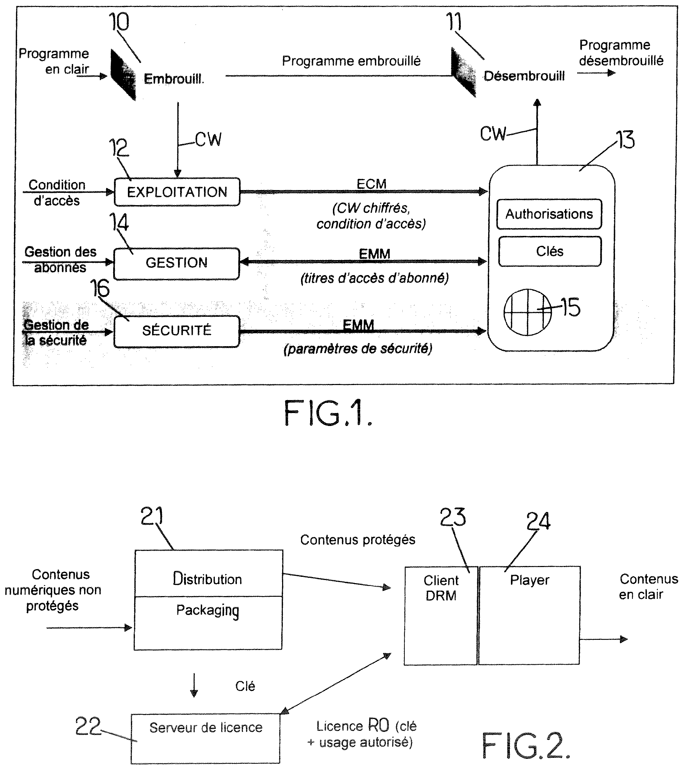

Dans ce domaine, en fonction de la nature d'un réseau support de communication de contenus multimédia et d'un type de service offert, les systèmes de protection de contenus mis en oeuvre peuvent être typiquement des systèmes de contrôle d'accès (ou CAS, pour "*Conditional Access Systems*"), ou encore des systèmes de gestion de droits numériques (ou DRM, pour "*Digital Rights Management*")*.*
Des applications typiques sont par exemple :
- l'émission/réception de données multimédia diffusées en temps réel (ou "*TV live*"),
- ou la lecture de données multimédia stockées par un enregistreur numérique (souvent à base de disque dur) de terminal à disposition d'un utilisateur (ou PVR pour "*Personal Video Recorder*"),
- ou encore des applications de vidéo à la demande (ou VOD pour "*Video On Demand*").
La sécurité de tels systèmes repose notamment sur l'assurance (donc sur la vérification) de l'authenticité et de l'intégrité des messages de contrôle d'accès.
De tels messages peuvent être typiquement, en contexte de contrôle d'accès CAS, des messages de contrôle d'accès spécifiques, dits "*messages EMM*" (pour "*Entitlement Management Message*") et "*messages ECM*" (pour "*Entitlement Control Message*")*.* La description de la figure 1 donnée ci-après explique un exemple de contexte d'utilisation de tels messages.
Une présentation exhaustive des systèmes de contrôle d'accès est accessible dans le document :
"FUNCTIONAL MODEL OF A CONDITIONAL ACCESS SYSTEM", EBU REVIEW-TECHNICAL EUROPEAN BROADCASTING UNION. BRUSSELS, BE, no 266 21 décembre 1995.

En contexte de gestion DRM, de tels messages peuvent être typiquement des licences. La description de la figure 2 donnée ci-après explique un exemple de contexte d'utilisation de tels messages.

Dans les systèmes de contrôle d'accès (CAS), ou encore de gestion DRM, mettant en oeuvre une cryptographie symétrique à clés secrètes, la redondance cryptographique, transmise avec les messages de type EMM, ECM (pour le contrôle d'accès) ou respectivement de licence, pour en garantir l'authenticité et l'intégrité, est classiquement mise en oeuvre eu moyen d'un code MAC (pour "*Message Authentication Code*").

L'invention s'applique néanmoins dans tout contexte où un attaquant peut avoir accès à un dispositif réalisant la vérification d'un code d'authentification d'un message (ou MAC pour "*Message Authentication Code*")*.*

On décrit ci-après l'intervention d'une telle vérification MAC en contexte contrôle d'accès CAS, puis en contexte de gestion DRM.

### Contexte de contrôle d'accès CAS

Les systèmes de contrôle d'accès CAS fonctionnent souvent suivant des principes d'architecture et une cinématique résumés sur la figure 1. Telle qu'illustrée dans la figure 1, la protection d'un contenu tel qu'un programme audiovisuel (ou la protection d'une composante d'un tel programme) durant son transport et le contrôle de son accès par un abonné mettent en oeuvre, d'une part, une fonction d'embrouillage/désembrouillage du programme, et, d'autre part, une fonction de contrôle d'autorisation d'accès de l'abonné s'appuyant sur une distribution d'autorisations gérées à distance par l'opérateur.

### L'embrouillage 10

L'embrouillage (référence 10 de la figure 1) permet de rendre inintelligible le programme durant son transport mais peut néanmoins être capté sans restriction. Diverses solutions d'embrouillage/désembrouillage peuvent être mises en oeuvre. Il s'agit d'algorithmes de chiffrement/déchiffrement propriétaires ou normalisés, choisis selon le contexte.

Afin de rendre l'embrouillage imprédictible et donc le désembrouillage fortuit quasiment impossible, les algorithmes de chiffrement/déchiffrement utilisent une clé appelée communément "*mot de contrôle*" (référence CW pour "*Control Word*" de la figure 1). Il est d'usage de modifier la valeur du mot de contrôle de façon aléatoire, selon des stratégies variables choisies selon le contexte. Par exemple, un mot de contrôle peut être modifié toutes les 10 secondes, de façon classique, en télévision diffusée ou, à l'extrême, à chaque film uniquement par exemple en contexte de VOD avec particularisation individuelle par abonné.

Un système d'accès conditionnel notamment de la Demanderesse n'inclut pas de solution d'embrouillage/désembrouillage mais est compatible avec toute solution d'embrouillage dès lors qu'elle peut être initialisée par un mot de contrôle.

### Le contrôle d'accès

La mise en oeuvre de l'embrouillage/désembrouillage particularisé par un mot de contrôle dynamique nécessite que l'embrouilleur et le désembrouilleur (référence 11 de la figure 1) soient synchronisés avec précision quant à la valeur du mot de contrôle courant CW et quant à l'instant du changement de celui-ci.

En outre, le contrôle par l'opérateur de l'accès à un programme par un usager s'effectue en conditionnant l'accès au mot de contrôle à la disponibilité d'une autorisation "*commerciale*". L'opérateur attache au programme une condition d'accès qui doit être remplie par l'abonné pour pouvoir désembrouiller ce programme.

La transmission des mots de contrôle et la description d'une condition d'accès sont deux des fonctionnalités d'un système d'accès conditionnel typique, notamment de la Demanderesse. Ils sont matérialisés par des messages de contrôle d'accès spécifiques, dits "*messages ECM*", calculés par le sous-système "*Exploitation*" 12 de la figure 1. Ces messages ECM sont destinés à être traités par le processeur de sécurité 13 coopérant avec un terminal désembrouilleur 11 (dit souvent "*décodeur*" par abus de langage). En pratique, le processeur de sécurité 13 se matérialise souvent par une carte à puce à disposition d'un abonné et coopérant avec le terminal 11.

Dans la partie réception, donc auprès de l'ensemble terminal - processeur de sécurité, un message ECM est vérifié quant à sa sécurité (authenticité, intégrité) puis la condition d'accès est comparée aux titres d'accès présents dans la mémoire non volatile du processeur de sécurité. Si la condition d'accès est remplie par l'un de ces titres d'accès, le processeur de sécurité restitue par déchiffrement le mot de contrôle et le fournit au terminal, permettant ainsi le désembrouillage.

### Gestion des titres d'accès

L'abonné peut remplir une condition d'accès à un programme s'il dispose d'un titre d'accès satisfaisant cette condition tel qu'un titre d'abonnement, la référence d'un programme acquise à l'avance ou en temps réel, ou autres. Bien entendu, d'autres critères peuvent intervenir dans la conformité de l'abonné à une condition d'accès, tels qu'une référence géographique, un respect de niveau moral, ou autres.

Les titres d'accès ou les moyens d'acquérir les titres d'accès (par exemple des "*jetons*" pour un PPV impulsif - pour "*Pay Per View*") sont donc gérés par l'opérateur et inscrits ensuite à distance dans la mémoire non volatile (référence 15) du processeur de sécurité 13 de l'abonné.

Les actions à distance par l'opérateur sur les titres d'accès d'un abonné constituent un autre ensemble de fonctionnalités du système d'accès conditionnel de la figure 1. Elles sont matérialisées par des messages de contrôle d'accès spécifiques, dits "*messages EMM*", calculés par le sous-système "*Gestion*" (référence 14) de la figure 1, et par le processeur de sécurité 13.

### Sécurité cryptographique

Un système de contrôle d'accès ne remplit toutefois son rôle que s'il n'est pas compromis ou détourné. En particulier, les messages destinés au système de réception (messages ECM et EMM) ne doivent pouvoir être générés et exploités que par des dispositifs dûment habilités par l'opérateur de service.

Cette restriction fondamentale est assurée en protégeant les messages destinés au système de réception par des modalités cryptographiques garantissant l'intégrité de ces messages, leur authenticité et la confidentialité des données sensibles qu'ils peuvent comporter. En particulier, l'authenticité et l'intégrité des messages sont protégées en associant à chaque message sa propre redondance cryptographique.

Ces modalités cryptographiques mettent en oeuvre des algorithmes spécifiques paramétrés par des clés. La modification des valeurs de clés est un moyen complémentaire de renforcer la sécurité du système. La mise à jour de ces clés est assurée par des messages de gestion EMM spécifiques à la sécurité.

### Traitement des messages de contrôle d'accès par le système de réception

La majorité des solutions opérationnelles de systèmes de contrôle d'accès s'appuie sur un système de réception composé de deux éléments :
- le terminal 11 assurant notamment la réception du signal contenant le/les services, son démultiplexage, le désembrouillage et le décodage des composantes du service choisi par l'utilisateur,
- le processeur de sécurité 13, supportant les fonctions du contrôle d'accès avec les traitements cryptographiques associés.

Le processeur de sécurité 13 traite les messages EMM et ECM pour contrôler l'accès aux services, mémoriser / gérer / vérifier les droits d'accès à ces services, mémoriser / gérer / exploiter les secrets cryptographiques et appliquer aux messages reçus les traitements et contrôles cryptographiques de sécurité.

Le terminal récepteur 11 et le processeur de sécurité 13 dialoguent par une interface fréquemment conforme à la norme ISO 7816.

Dans cette architecture, certaines fonctions liées au contrôle d'accès peuvent être traitées par le terminal 11 en collaboration avec le processeur de sécurité 13. Il s'agit notamment des fonctions de sélection des messages ECM et EMM à traiter, des fonctions de dialogue avec l'utilisateur et de la communication avec la partie du terminal incluant un module de désembrouillage.

Ce principe d'architecture, dans lequel peut s'appliquer l'invention, se retrouve également lorsqu'un module de contrôle d'accès et de désembrouillage externe au terminal est utilisé, conformément par exemple au module à interface commune défini par la norme DVB ("*Digital Video Broadcast*")*.* Un tel module est naturellement considéré comme faisant partie de la description de la présente invention.

### Contexte de gestion DRM

Les systèmes de gestion DRM actuels fonctionnent suivant des principes d'architecture et une cinématique résumés sur la figure 2 sur laquelle :
- un serveur 21 assure une mise en forme (ou "*packaging*") d'un contenu multimédia au "*format DRM*" et distribue les contenus protégés (par exemple, en mode de diffusion large ou "*streaming*", ou en téléchargement individuel),
- un serveur de licences 22 permet la gestion et la maîtrise des usages : une licence (ou RO pour "*Rights Object*") correspond à la juxtaposition d'informations sur le contenu, notamment son identifiant et éventuellement la clé cryptographique permettant de le désembrouiller, et d'informations sur les autorisations et contraintes d'usage du contenu (nombre de lectures autorisées, droits de gravure, date limite d'utilisation, durée d'utilisation, ou autres),
- Un client DRM 23 sur le terminal du client autorise l'accès au contenu protégé et assure le contrôle de la licence (voire son renouvellement si besoin), et
- Finalement, un éditeur de contenu ou "*player*" 24 en aval du client DRM 23 assure l'affichage ou le jeu du contenu en clair.

Dans la plupart des systèmes de gestion DRM actuels, la licence d'utilisation RO, encryptée grâce à une clé unique propre au client DRM (le plus souvent obtenue suivant les mécanismes d'infrastructure à clé publique ou PKI), n'est donc lisible/valable que pour le client DRM 23 en question. En d'autres termes, une licence d'utilisation est structurellement liée à "*l'identité*" d'un terminal (dans lequel le client DRM 23 est embarqué). La notion "*d'identité*" s'entend ici par l'utilisation d'une clé de cryptage (secrète ou privée) propre au terminal.

Un élément important de la licence d'utilisation est le langage de description des droits (ou REL pour "*Rights Expression Language*"), adossé à un dictionnaire de droits, permet d'exprimer les contraintes/conditions et les permissions particulières associées à l'utilisation d'un contenu.

Une présentation détaillée d'un système DRM (par exemple OMA-DRM) est accessible dans les documents cités par le consortium "*Open Mobile Alliance*", tels que :
- "OMA DRM Approved Version 2.0 - 23" (Mars 2007), ou encore
- "OMA DRM Spécification V2.0 Draft Version 2.0 - 21" (Juin 2004).

### Calcul de code MAC

Un code MAC est classiquement calculé à partir d'une fonction E de chiffrement par bloc de longueur L. Il s'agit d'un chiffrement par blocs et chaînage ou "*CBC-MAC*" (CBC pour "*Cipher Block Chaining*"). Outre le message M, de longueur quelconque, à protéger, cette fonction prend en entrée une clé symétrique K et un vecteur d'initialisation IV de longueur L. Les données K et IV sont partagées par la tête de réseau et par la partie terminale, la donnée K étant secrète et la donnée IV, publique.

Le calcul du code MAC consiste alors en la complémentation de M à une longueur multiple de L, puis en l'application, au message M' ainsi obtenu, du chiffrement en mode CBC. Le code MAC du message M est le dernier bloc chiffré ainsi obtenu. Un algorithme du calcul réalisé peut donc être du type :
Temp2=IV
Pour i allant de 1 à n, faire :
   Temp1 = Temp2 XOR M'ᵢ
   Temp2 = E(K,Temp1)
Fin Pour
MAC = Temp2
où n est le nombre de blocs de longueur L.

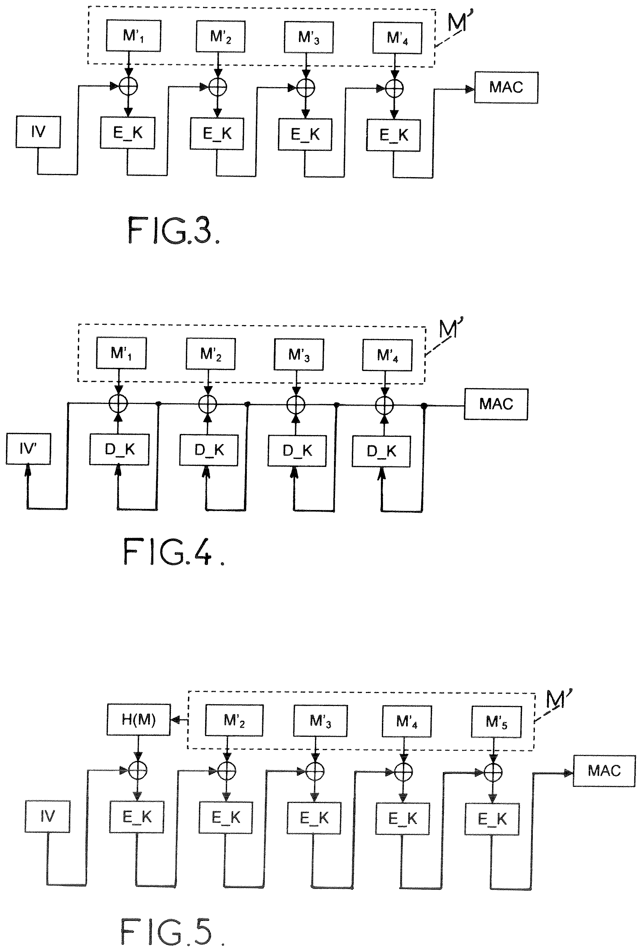

Le message M' est donc constitué de la concaténation de ces n blocs et le code MAC obtenu est le suivant :
MAC = E(K, M'ₙ XOR E(K, M'ₙ₋₁ XOR ... E(K, M'₂ XOR E(K, M'₁ XOR IV))...)) Ce procédé de calcul du code MAC est représenté sur la figure 3, où l'on suppose le message M' constitué de la concaténation de n blocs (avec n=4 dans l'exemple représenté) de longueur L et notés M'₁, M'₂, M'₃ et M'₄.

### Vérification de code MAC

Pour s'assurer de l'authenticité et de l'intégrité d'un message M, on vérifie le code MAC reçu avec ce message M.

Cette vérification du code MAC consiste classiquement en un nouveau calcul de ce code MAC, puis en la comparaison de la valeur de code MAC ainsi (re-)calculée avec celle reçue avec le message M. Si ces valeurs sont égales, le message reçu est authentique et intègre.

Le nouveau calcul, par une entité réceptrice, du code MAC d'un message M, est réalisé à partir du message M, de la clé K et du vecteur d'initialisation IV, selon le même algorithme que par l'entité émettrice du message M, c'est-à-dire selon le procédé illustré par la figure 3.

Le document US 202/071552 A1 décrit un procédé de génération et de vérification d'un code MAC d'authentification de message.

### Problèmes posés

L'algorithme classique de vérification du code MAC d'un message, s'appuyant sur un (re-)calcul du code MAC, provoque nécessairement la révélation, dans et par l'entité réceptrice, de la valeur correcte du code MAC du message considéré.
Cette révélation a bien sûr lieu dans tous les cas, y compris ceux où le message considéré a été reçu avec un code MAC erroné.
Cette révélation permet alors (à condition toutefois d'avoir réussi au préalable une attaque sur le système permettant d'en extraire la valeur correcte de code MAC (re-)calculée) de soumettre un message de son choix avec un code MAC arbitraire ayant toutefois la longueur L, pour en obtenir la valeur correcte de code MAC. Le message peut ensuite être re-soumis, avec cette valeur correcte de code MAC, au système récepteur, et donc être pris en compte par lui.
Une telle attaque peut par exemple consister à provoquer des perturbations ("*glitches*") sur le composant de manière à récupérer une image (ou "*dump*") de la mémoire volatile du système contenant la mémoire tampon (ou "*buffer*") de calcul du code MAC.
Une telle attaque peut en particulier être conduite dans tout contexte, notamment celui de la télévision à péage diffusée, où un attaquant peut avoir accès à un dispositif réalisant la vérification de code MAC.

Un remède à cet inconvénient forcerait alors des utilisateurs indélicats (ou "*pirates*") à déterminer jusqu'à la clé et la fonction cryptographique de chiffrement pour accéder au code MAC, le coût de cette opération étant bien entendu supérieur à celui de l'attaque précitée.

### PRESENTATION DE L'INVENTION

La présente invention vient améliorer la situation en proposant d'interdire la révélation de la valeur correcte du code MAC pour un message donné.
Elle propose à cet effet un procédé, mis en oeuvre par des moyens informatiques, de vérification de l'authenticité et/ou de l'intégrité d'un message transmis, avec une redondance cryptographique, d'une entité émettrice vers une entité réceptrice.
Dans ce procédé, la redondance cryptographique est un code d'authentification de message (ou MAC) calculé à partir d'au moins un premier chiffrement, par une fonction de chiffrement par bloc et à l'aide d'une clé, d'une combinaison d'un vecteur d'initialisation et d'un premier bloc représentatif d'au moins une première partie de données du message.

La clé de chiffrement et le vecteur d'initialisation ont des valeurs stockées par les entités émettrice et réceptrice.
La vérification par l'entité réceptrice de la redondance cryptographique accompagnant un message reçu comporte, au sens de l'invention, les étapes :
a) application à la redondance cryptographique d'au moins un premier déchiffrement, par une fonction de déchiffrement homologue de la fonction de chiffrement et à l'aide de la clé,
b) combinaison du résultat de ce premier déchiffrement à un premier bloc représentatif d'au moins une première partie de données du message reçu,
c) comparaison du résultat de la combinaison de l'étape b) à la valeur secrète stockée par l'entité réceptrice, et
d) décision d'accepter le message reçu comme authentique et/ou intègre en cas d'identité des valeurs comparées à l'étape c).

Les combinaisons précitées comportent préférentiellement l'application de la fonction booléenne "*OU exclusif*" (ou "*XOR*").

Avantageusement, le chiffrement pas bloc fait intervenir plus d'un bloc et le calcul du code d'authentification de message comporte alors au moins un deuxième chiffrement, par la fonction de chiffrement et à l'aide de la clé, d'une combinaison du résultat du premier chiffrement et d'un deuxième bloc représentatif d'une deuxième partie de données du message.
Préférentiellement, l'étape b) au sens de l'invention comporte alors en outre au moins les opérations :
b1) application, à la combinaison entre le résultat du premier déchiffrement et le premier bloc, d'au moins un deuxième déchiffrement, par la fonction de déchiffrement et à l'aide de la clé, et
b2) combinaison du résultat de ce deuxième déchiffrement à un deuxième bloc représentatif d'au moins une deuxième partie de données du message reçu.

Dans le cas avantageux d'un chiffrement par bloc impliquant une pluralité de blocs et dans lequel la fonction de chiffrement est de longueur de bloc L, le calcul du code d'authentification de message comporte :
- une transformation d'un message à envoyer par ajout ou suppression de données pour que la taille du message transformé soit égale à nL, n étant un entier supérieur ou égal à 2, choisi,
- un découpage du message transformé en n blocs successifs de longueur L, selon une première succession choisie,
- un premier chiffrement d'une combinaison entre le vecteur d'initialisation et un premier bloc de ladite première succession, et
- au moins un chiffrement suivant de la combinaison entre le résultat du premier chiffrement et un deuxième bloc qui suit le premier bloc dans la première succession.
Préférentiellement, les étapes a) et b) au sens de l'invention comportent alors :
- une transformation d'un message reçu par ajout ou suppression de données pour que la taille du message transformé soit égale à nL,
- un découpage du message transformé en n blocs successifs de longueur L, selon une seconde succession choisie,
- une combinaison entre un premier déchiffrement de la redondance cryptographique reçue et un premier bloc de ladite seconde succession, et
- au moins un déchiffrement suivant de la combinaison entre le résultat du premier déchiffrement et un deuxième bloc qui suit le premier bloc dans ladite seconde succession.

Avantageusement, l'invention met en oeuvre un chiffrement en mode CBC (pour "*Cipher Block Chaining*"), le calcul du code d'authentification de message comportant alors :
- l'application au message à émettre d'une complémentation à une longueur multiple de la longueur L pour obtenir un message transformé constitué d'une concaténation de n blocs chacun de longueur L, n étant un entier supérieur ou égal à 2, et
- l'application au message transformé d'un chiffrement par bloc en mode CBC. Préférentiellement, le calcul du vecteur d'initialisation comporte alors :
- une complémentation du message reçu à une longueur multiple de la longueur L pour obtenir un message transformé constitué d'une concaténation de n blocs chacun de longueur L, n étant un entier supérieur ou égal à 2, et
- un déchiffrement par bloc, en mode CBC, du message transformé.
On indique toutefois que le procédé peut s'appliquer à tout algorithme de vérification de code MAC par construction inversible, de manière à vérifier une propriété syntaxique sur le message d'origine (par exemple des traitements désignés par XCBC-MAC, OMAC, EMAC, ou autres).

Dans une réalisation avantageuse, pour le calcul du code d'authentification de message, le premier bloc de la première succession précitée résulte de l'application au message d'une fonction à sens unique.

Le résultat de l'application de la fonction à sens unique est alors envoyé à destination de l'entité réceptrice, avec le message, préférentiellement sous la forme d'une concaténation :
- du résultat de l'application au message de la fonction à sens unique, et
- du message lui-même.

La fonction à sens unique est préférentiellement une fonction de hachage et le résultat de son application est de longueur supérieure ou égale à la longueur L.

En complément ou en variante, dans le cas où le message est susceptible d'être transmis par fragments, de l'entité émettrice à l'entité réceptrice, la première succession de blocs et la seconde succession de blocs sont préférentiellement inversées, de sorte que l'entité réceptrice peut commencer le calcul du vecteur d'initialisation dès réception d'un premier fragment de message.

En contexte de contrôle d'accès (CAS), notamment à des données télévisuelles, une application avantageuse du procédé vise la vérification de la redondance cryptographique accompagnant les messages de contrôle d'accès tels que notamment les messages ECM et EMM.

En contexte de gestion de droits numériques (DRM), notamment de contenus audio et/ou vidéo, une application avantageuse du procédé vise la vérification de la redondance cryptographique accompagnant les licences sur lesdits contenus.

### BREVE DESCRIPTION DES DESSINS

D'autres caractéristiques et avantages de l'invention apparaîtront à l'examen de la description détaillée ci-après, et des dessins annexés sur lesquels :
- la figure 1, décrite ci-avant, illustre schématiquement les principes d'architecture de contrôle d'accès CAS,
- la figure 2, décrite ci-avant, illustre schématiquement les principes d'architecture de gestion DRM,
- la figure 3, décrite ci-avant, illustre schématiquement un calcul de code MAC, tel qu'il est réalisé dans l'art antérieur aussi pour la vérification de ce code MAC,
- la figure 4 illustre le calcul, au sens de l'invention, d'un vecteur d'initialisation pour la rétro-vérification de code MAC,
- la figure 5 illustre le calcul de code MAC de message préfixé par une fonction à sens unique qui peut avantageusement être mis en oeuvre par une entité émettrice, dans une réalisation de l'invention,
- la figure 6 illustre la rétro-vérification d'un code MAC calculé comme illustré sur la figure 5, avec préfixation de message par une fonction à sens unique, cette rétro-vérification étant mise en oeuvre par une entité réceptrice dans l'exemple représenté,
- la figure 7 illustre un calcul inversé de code MAC qui peut avantageusement être mis en oeuvre par une entité émettrice, dans une réalisation de l'invention,
- la figure 8 illustre la rétro-vérification inversée de code MAC calculé comme illustré sur la figure 7, cette rétro-vérification inversée étant mise en oeuvre par une entité réceptrice dans l'exemple représenté,
- les figures 9a et 9b comparent les mises en oeuvre respectives de l'art antérieur (figure 9a) et au sens de l'invention (figure 9b).

### DESCRIPTION DETAILLEE

L'invention propose donc un perfectionnement au mécanisme de vérification de messages, ce mécanisme mettant en oeuvre des codes MAC. Elle permet en particulier de vérifier le code MAC d'un message, sans précisément (re-)calculer le code MAC lui-même, pour ne pas risquer de fournir ce dernier.
Dans le contexte présenté précédemment en référence à la figure 3, mais appliqué au sens de l'invention, on (re-)calcule non pas le code MAC mais la valeur du vecteur d'initialisation IV, à partir du message reçu et de sa valeur de code MAC, ainsi que de la clé K. Ce (re-)calcul met en particulier en oeuvre une fonction D de déchiffrement associée à la fonction de chiffrement E (figure 4).

Si le vecteur d'initialisation IV (re-)calculé est égal à celui utilisé par l'entité émettrice pour calculer le code MAC, alors ce code MAC reçu est diagnostiqué comme correct, et donc le message est déterminé comme authentique et intègre.

Il suffit alors, pour la mise en oeuvre de l'invention, que la valeur correcte du vecteur d'initialisation soit constante, de syntaxe prédéfinie, ou implicite. L'attaquant doit alors choisir une valeur correcte du vecteur d'initialisation, pour l'associer à la valeur reçue du code MAC, puis générer un message syntaxiquement correct qui pourrait être soumis au système de contrôle d'accès.
On prouve toutefois que l'obtention, par l'attaquant, d'une valeur de vecteur d'initialisation correcte peut être rendue aussi improbable que celle de générer un code MAC valide pour un message de son choix, et que la connaissance des résultats intermédiaires que pourrait révéler le système de contrôle d'accès ne favorise pas l'attaquant dans l'objectif de réaliser cette génération de message correct.

En référence à la figure 4, sous les mêmes hypothèses et avec les mêmes notations que celles de la figure 3, la rétro-vérification de code MAC est basée sur le (re-)calcul d'une valeur IV' de vecteur d'initialisation, où MAC désigne le code MAC transmis.
Ainsi, les entrées de la figure 4 sont le code MAC et le message M, tandis que la sortie donne une valeur IV' de vecteur d'initialisation à vérifier, alors que les entrées de la figure 3, pour le (re-)calcul et la vérification du code MAC au sens de l'art antérieur, étaient la valeur connue IV du vecteur d'initialisation et le message M, tandis que la sortie donnait une valeur de code MAC à vérifier.
En référence à la figure 4, le calcul, au sens de l'invention, de la valeur IV' consiste alors en la complémentation de M à une longueur multiple de L, puis en l'application, au message M ainsi obtenu, du déchiffrement en mode CBC en utilisant la fonction de déchiffrement D associée à la fonction de chiffrement E de la figure 3. Le vecteur d'initialisation est le dernier bloc chiffré ainsi obtenu.

Un algorithme correspondant au traitement représenté sur la figure 4 au sens de l'invention peut alors être du type :
Temp1 = MAC
Pour i allant de 0 à n-1, faire :
   Temp2 = D(K,Temp1)
   Temp1 = Temp2 XOR M'ₙ₋ᵢ
Fin Pour
IV' = Temp1
La valeur de vecteur d'initialisation obtenue est alors donnée par :
IV' = M'₁ XOR D(K, M'₂ XOR ... D(K, M'ₙ₋₁ XOR D(K, M'ₙ XOR D(K, MAC))) ...)

Sur la figure 4 représentant un exemple de ce calcul de vecteur d'initialisation pour rétro-vérification du code MAC, le message M' est donc constitué de la concaténation de n blocs (avec n=4 dans l'exemple représenté) de longueur L et notés M'₁, M'₂, M'₃ et M'₄.

La valeur IV' obtenue est celle que devrait utiliser l'entité réceptrice pour calculer le MAC du message reçu de façon à en obtenir la même valeur que celle transmise par l'émetteur.
La rétro-vérification de code MAC consiste ensuite en la comparaison de la valeur IV' de vecteur d'initialisation trouvée, avec la valeur IV partagée de vecteur d'initialisation qui, en principe, a été utilisée par l'entité émettrice pour calculer la valeur de code MAC transmise avec le message reçu. Si ces valeurs sont égales, le message reçu est authentique et intègre.

Nonobstant la comparaison des entrées et sorties des figures 3 et 4 données ci-avant, il convient d'indiquer que l'entité émettrice conserve un schéma similaire à celui de la figure 3 pour construire le code MAC. Toutefois, des améliorations de ce schéma sont présentées ci-après.

On appelle ci-après "*rétro-vérification du code MAC*" l'opération, au sens de l'invention, consistant à vérifier la valeur IV' du vecteur d'initialisation. Cette vérification menée par l'entité réceptrice est identique à celle présentée sur la figure 4. Elle consiste à (re-)calculer la valeur IV' du vecteur d'initialisation en fonction du message reçu et de son code MAC, et à la comparer avec la valeur attendue IV du vecteur d'initialisation.

Une faiblesse résiduelle que présenterait *a priori* le traitement au sens de l'invention est la révélation dans le système de contrôle d'accès des valeurs correcte IV et (re-)calculée IV' de vecteur d'initialisation, et donc leur extraction possible par un attaquant du système.
Ainsi :
- en soumettant au système un message M de son choix avec un code MAC arbitraire,
- en extrayant ces valeurs,
- puis en remplaçant le premier bloc M₁ de son message par la grandeur :
   N = M₁ XOR IV' XOR IV,
   l'attaquant obtient un message [N M₂ ... Mₙ] qui peut être soumis avec succès au système avec le code MAC arbitraire choisi, c'est-à-dire dont le (re-)calcul de vecteur d'initialisation donne le résultat IV attendu.
   La rétro-vérification du code MAC serait alors positive, et le message reçu pris alors en compte.

Cependant, le résultat IV' du calcul ci-dessus n'étant *a priori* pas maîtrisé par l'attaquant, celui de la grandeur N ne l'est pas davantage, de sorte qu'il est grandement improbable que la syntaxe du nouveau message [N M₂ ... Mₙ] soit celle d'un message valide.
Le fait que les résultats des calculs de la valeur IV' et de la grandeur N ne sont pas maîtrisés, signifie en outre qu'on ne sait pas modifier le code MAC arbitraire au vu des premiers résultats erronés ci-dessus, pour obtenir un nouveau message [N M₂ ... Mₙ] de syntaxe valide.

En tout état de cause, dans une réalisation avantageuse, on offre la possibilité de se prémunir, à la base, contre la faiblesse résiduelle décrite ci-avant.
On prévoit à cet effet de préfixer le message à envoyer par l'entité émettrice avec le résultat de son propre traitement par une fonction à sens unique, telle qu'une fonction de hachage (ou fonction cryptographique à sens unique).
Cette préfixation peut être :
- "*implicite*" : le préfixe n'est alors pris en compte que pour le calcul du code MAC et sa vérification à travers le calcul de la valeur IV' (appelée ci-après "*rétro-vérification*") auprès de l'entité réceptrice, mais non transmis avec le message,
- ou "*explicite*" : le préfixe est alors en outre transmis avec le message et le code MAC.
L'utilisation d'une fonction H à sens unique consiste à calculer :
- la grandeur H(M) ∥ M, où " ∥ " désigne l'opérateur de concaténation ;
- le code MAC du message concaténé ainsi obtenu.

Le message M' = (M'₁, M'₂, ..., M'ₙ) est obtenu par complémentation (ou "*padding*") de la grandeur H(M) ∥ M.
Le calcul de code MAC lui-même est alors réalisé ensuite de façon similaire à celle illustrée sur la figure 3.
Il convient de noter que la sécurité du traitement est affaiblie si la longueur de l'expression H(M) est inférieure à la longueur L. On choisira avantageusement une fonction à sens unique H pour que l'expression H(M) soit de longueur supérieure ou égale à la longueur L.
On a en particulier M'₁ = H(M) dans le cas où l'expression H(M) est de longueur L. Dans ce cas avantageux, les longueurs de bloc peuvent rester inchangées et n'ont pas à être modifiées en ajoutant ou en supprimant des données.
Le calcul de code MAC réalisé est alors du type :
Temp2 = E(K, IV XOR H(M))
Pour i allant de 2 à n, faire :
   Temp1 = Temp2 XOR M'ᵢ
   Temp2 = E(K,Temp1)
Fin Pour
MAC = Temp2
où n est le nombre de blocs de longueur L. Le message M' est constitué de la concaténation de ces blocs et le code MAC obtenu est donné par :
   MAC = E(K, M'ₙ XOR E(K, M'ₙ₋₁ XOR ... E(K, M'₂ XOR E(K, M'₂ XOR E(K, IV XOR H(M))))...))
Ce calcul du code MAC est illustré sur la figure 5, où l'on suppose le message M' constitué de la concaténation de n blocs (avec n=5 dans l'exemple représenté) de longueur L et notés H(M)=M'₁, M'₂, M'₃, M'₄ et M'₅.
L'entité émettrice transmet ensuite :
- la valeur du vecteur d'initialisation IV, le cas échéant le message M dans le mode de réalisation "*implicite*" précité, et le code MAC ainsi calculé ;
- la valeur du vecteur d'initialisation IV, le cas échéant la concaténation H(M) ∥ M dans le mode de réalisation "*explicite*" précité, et le code MAC ainsi calculé.

Bien entendu, les cas où l'expression H(M) est de longueur multiple de la longueur L sont aussi avantageux.
Dans les autres cas, un "*padding*" complémentaire est utile.

Auprès de l'entité réceptrice, ensuite, la rétro-vérification du code MAC visant la vérification de la valeur IV' du vecteur d'initialisation, suit le même principe que celui illustré sur la figure 4. Elle consiste à re-calculer la valeur IV' du vecteur d'initialisation en fonction du message reçu et de son code MAC, et à la comparer avec la valeur attendue IV du vecteur d'initialisation.
Un exemple d'algorithme de rétro-vérification est alors le suivant :
Temp1 = MAC
Pour i allant de 0 à n-1, faire :
   Temp2 = D(K,Temp1)
   Temp1 = Temp2 XOR M'ₙ₋ᵢ
Fin Pour
IV' = H(M) XOR D(K, Temp1)
La valeur de vecteur d'initialisation obtenue est donc :
IV' = H(M) XOR D(K, M'₁ XOR D(K, M'₂ XOR ... D(K, M'ₙ₋₁ XOR D(K, M'ₙ XOR D(K, MAC))) ...))

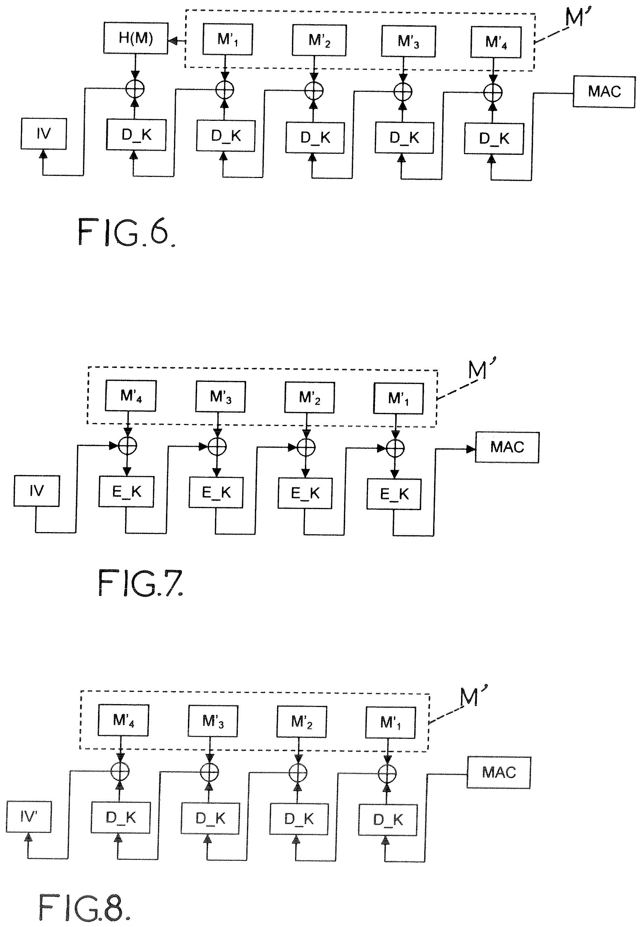

Ce calcul de vecteur d'initialisation pour rétro-vérification du code MAC est représenté sur la figure 6, où l'on suppose le message M' constitué de la concaténation de n blocs (n=4 dans l'exemple rerpésenté) de longueur L et notés M'₁, M'₂, M'₃ et M'₄.
Ici, cette vérification est en outre complétée par la vérification du résultat du traitement du message par la fonction à sens unique H. Cette vérification se fait de façon analogue à celle connue dans l'art antérieur d'un code MAC, par (re-)calcul de ce résultat et comparaison à la valeur reçue. Si les deux valeurs sont égales, le message est intègre.
Cette deuxième vérification empêcherait alors un attaquant de modifier le début du message M comme exposé précédemment, la faiblesse résiduelle précitée étant ainsi surmontée. En effet, la modification du début du message M, quand bien même elle serait correcte, entrainerait une autre modification, non maîtrisée quant à elle, de la grandeur H(M).

On décrit ci-après une réalisation avantageuse dans un contexte (fréquent en contrôle d'accès CAS ou en gestion DRM) où un message peut, pour différentes raisons, être transmis par morceaux.
Il est alors opportun de pouvoir réaliser la (rétro-)vérification du code MAC du message, au fur et à mesure de sa réception, et en ayant besoin de ne mémoriser finalement qu'un résultat intermédiaire plutôt que l'ensemble des morceaux du message déjà reçus.
A cet effet, le code MAC du message doit pouvoir être transmis avec son premier bloc, de sorte que sa (rétro-)vérification puisse commencer dès réception de ce premier bloc. On transmet ainsi, typiquement, le code MAC suivi du message, puis du vecteur d'initialisation.
Pour une mise en oeuvre avantageuse de l'invention, il suffit alors d'inverser l'ordre des blocs du message avant d'en calculer le code MAC, pour pouvoir commencer sa (rétro-)vérification ensuite simplement à partir du premier bloc.

Le calcul de code MAC à réaliser est ainsi inversé :
Temp2=IV
Pour i allant de 0 à n-1, faire :
   Temp1 = Temp2 XOR M'ₙ₋ᵢ
   Temp2 = E(K,Temp1)
Fin Pour
MAC = Temp2
où n est le nombre de blocs de longueur L. Le message M' est constitué de la concaténation de ces n blocs M' = [M'₁ M'₂ ... M'ₙ] et le code MAC obtenu est donné, ici, par :
   MAC = E(K, M'₁ XOR E(K, M'₂ XOR ... E(K, M'ₙ₋₁ XOR E(K, M'ₙ XOR IV))...))
alors qu'habituellement, il est donné par :
   MAC = E(K, M'ₙ XOR E(K, M'ₙ₋₁, XOR ... E(K, M'₂ XOR E(K, M'₁ XOR IV))...))

Ce calcul du code MAC est illustré sur la figure 7, où l'on suppose le message M' constitué de la concaténation de n blocs (n=4 dans l'exemple représenté) de longueur L et notés M'₁, M'₂, M'₃ et M'₄.

La rétro-vérification à réaliser d'un code MAC ayant été calculé dans le mode inversé décrit ci-avant peut suivre par exemple l'algorithme suivant :
Temp1 = MAC
Pour i allant de 1 à n, faire :
   Temp2 = D(K,Temp1)
   Temp1 = Temp2 XOR M'ᵢ
Fin Pour
IV' = Temp1
La valeur du vecteur d'initialisation obtenue est alors donnée par :
IV' = M'ₙ XOR D(K, M'ₙ₋₁ XOR ... D(K, M'₂ XOR D(K, M'₁ XOR D(K, MAC))) ...)

Ce calcul de vecteur d'initialisation pour la rétro-vérification inversée du code MAC est représenté sur la figure 8, où l'on suppose le message M' constitué de la concaténation de n blocs (n=4 dans l'exemple représenté) de longueur L et notés M'₁, M'₂, M'₃ et M'₄.

Il est possible de combiner le mode de réalisation visant l'utilisation d'une fonction à sens unique au mode de réalisation visant l'inversion de l'ordre des blocs.
La position du résultat H(M) de la fonction à sens unique H peut être transmis à une position choisie quelconque : en préfixe, ou encore en suffixe, au milieu des blocs, etc.
Les positions en préfixe et en suffixe sont préférées néanmoins.
Dans le cas "*explicite*" où la valeur H(M) est transmise et vérifiée, afin de permettre le calcul au fur et à mesure de la réception des fragments de message par l'entité réceptrice, la valeur H(M) est transmise par l'entité émettrice préférentiellement en dernier (donc en préfixe comme représenté sur la figure 5) pour être prise en compte par l'entité réceptrice juste avant la dernière opération de vérification relative au code MAC reçu (c'est-à-dire juste avant le calcul donnant la valeur présumée du vecteur d'initialisation comme représenté sur la figure 6).
Dans le cas "*implicite*" où la valeur H(M) est calculée par l'entité réceptrice, la position du résultat H(M) est choisie indifféremment du fait que l'ordre des blocs soit inversé.

Par ailleurs, il est recommandé, pour la mise en oeuvre de l'invention, les quelques précautions ci-après.
En référence à la figure 3, lorsque le code MAC était recalculé par l'entité réceptrice comme au sens de l'art antérieur, seule la fonction de chiffrement E était utilisée, alors que dans la vérification du vecteur d'initialisation par l'entité réceptrice au sens de l'invention (figure 4), on utilise la fonction de déchiffrement D. La rétro-vérification de code MAC requérant le déchiffrement du code MAC transmis, puis des blocs successifs modulo un résultat par l'opérateur XOR à chaque étape, il faut alors protéger le système contre une attaque qui utiliserait un module de calcul de rétro-vérification de code MAC comme oracle de déchiffrement, c'est-à-dire la fonction de déchiffrement D pour pouvoir accéder à des informations confidentielles qui auraient été notamment chiffrées avec la fonction E.

Une telle attaque consisterait à soumettre, au module de rétro-vérification de code MAC, un message vide, ainsi que le cryptogramme de données confidentielles, en lieu et place du code MAC, pour pouvoir extraire du système de vérification ces données confidentielles en clair.
Dans le contexte d'application avantageux de la diffusion de contenus multimédia protégés par un système de CAS, ces données confidentielles peuvent être typiquement le mot de contrôle de déchiffrement du contenu CW de la figure 1. Dans les contextes où la protection des contenus est réalisée par un système de DRM (figure 2), ces données confidentielles peuvent être typiquement la clé de déchiffrement du contenu.

Avantageusement, il est prévu, à cet égard, de faire en sorte que les opérations de déchiffrement mises en oeuvre pour la rétro-vérification du code MAC et pour la levée de la confidentialité des informations transportées par le message, soient différentes.
On pourra, à cet effet, et par ordre de préférence décroissant :
- cloisonner les algorithmes et les clés utilisés pour le traitement du code MAC, d'une part, et pour celui de la confidentialité, d'autre part, en imposant deux algorithmes différents ;
- utiliser la fonction cryptographique en mode de déchiffrement pour le calcul de code MAC, et donc en mode de chiffrement pour la rétro-vérification de code MAC, ainsi que pour le calcul de la confidentialité ;
- ou cloisonner les algorithmes et les clés utilisés pour le traitement du code MAC, d'une part, et pour celui de la confidentialité, d'autre part, en imposant des clés dédiées différentes.

Ainsi, en termes plus génériques, dans le cas où le message à transmettre comporte des données confidentielles chiffrées, la clé de déchiffrement K et/ou la fonction de déchiffrement D utilisées pour la vérification de la redondance cryptographique forment ainsi des moyens préférentiellement différents des moyens de déchiffrement des données confidentielles.

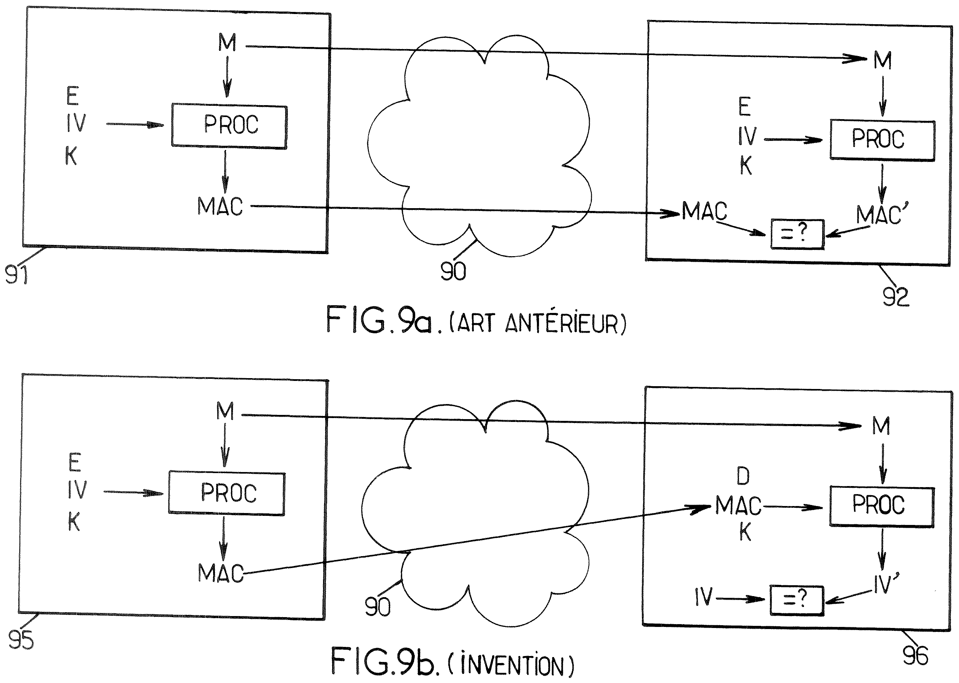

Les figures 9a et 9b synthétisent très schématiquement les différences de traitement entre les procédés au sens de l'art antérieur (figure 9a) et le procédé au sens de l'invention (figure 9b).
Sur ces deux figures 9a et 9b, les entités émettrices (référencées respectivement 91 et 95) jouent le même rôle, à savoir calculer, à l'aide de moyens tels qu'un processeur de calcul PROC et d'une mémoire de travail (non représentée), le code MAC à partir :
- du message M à envoyer,
- du vecteur d'initialisation IV,
- et en appliquant la clé K et la fonction E de chiffrement.
On gardera toutefois à l'esprit que l'entité émettrice 95 (figure 9b), dans un mode de réalisation préféré de l'invention, applique une fonction à sens unique au message M comme décrit précédemment. A ce titre, la présente invention vise aussi une telle entité émettrice 95 de messages M envoyés chacun avec une redondance cryptographique et comportant des moyens de calcul PROC d'un code d'authentification de message accompagnant chaque message à envoyer, conformément à ce mode de réalisation. La présente invention vise aussi un programme informatique, destiné à être stocké en mémoire de l'entité émettrice 95 et comportant des instructions pour la mise en oeuvre de ce mode de réalisation, lorsqu'elles sont exécutées par le processeur PROC de l'entité émettrice 95. Des exemples d'algorithmes d'un tel programme ont été donnés ci-avant.

En référence à nouveau aux figures 9a et 9b, le message M et le code MAC sont ensuite envoyés à destination d'une entité réceptrice, par exemple *via* un réseau 90. Dans les procédés de l'art antérieur (figure 9a), l'entité réceptrice 92 recalcule un code MAC', à partir du message M reçu, du vecteur d'initialisation IV, et en appliquant la clé K et la fonction E de chiffrement. Ensuite, l'entité réceptrice 92 compare le code MAC' ainsi calculé au code MAC reçu et décide que le message reçu M est valide en cas d'identité entre les codes comparés.
Dans une approche différente au sens de l'invention, l'entité réceptrice 96 (figure 9b) calcule, à l'aide de moyens tels qu'un processeur de calcul PROC et d'une mémoire de travail (non représentée), une valeur du vecteur d'initialisation IV', à partir du message M et du code MAC reçus et en appliquant la clé K et la fonction D de déchiffrement. Ensuite, l'entité réceptrice 96 compare la valeur IV' ainsi calculée à une valeur de référence IV stockée en mémoire. L'entité réceptrice 96 décide alors que le message reçu M est valide en cas d'identité entre les valeurs comparées.
A ce titre, la présente invention vise aussi une entité réceptrice 96 (figure 9b) de messages reçus chacun avec une redondance cryptographique MAC et comportant alors des moyens, tels que le processeur PROC, de vérification de la redondance cryptographique accompagnant un message reçu M.

Dans une application avantageuse de l'invention à un système de contrôle d'accès (CAS), l'entité réceptrice peut par exemple être un désembrouilleur recevant des messages, par exemple de type EMM ou ECM, avec une redondance cryptographique telle qu'un code MAC. Dans ce cas, le processeur de sécurité 13 (figure 1) d'un tel système comporte des moyens (un processeur, une mémoire de travail, ou autres) pour la vérification de la redondance cryptographique accompagnant un message reçu, conformément au procédé au sens de l'invention. A ce titre, la présente invention vise aussi un tel processeur de sécurité.

La présente invention vise aussi un programme informatique, destiné à être stocké en mémoire de l'entité réceptrice 96 de la figure 9b ou d'un processeur de sécurité au sens de l'invention et comportant alors des instructions pour la mise en oeuvre du procédé au sens de l'invention lorsqu'elles sont exécutées par un processeur PROC de l'entité réceptrice ou du processeur de sécurité. Des exemples d'algorithmes d'un tel programme ont été donnés ci-avant.

## Revendications

1. Procédé, mis en oeuvre par des moyens informatiques, de vérification de l'authenticité et/ou de l'intégrité d'un message (EMM, ECM; RO) transmis, avec une redondance cryptographique (MAC), d'une entité émettrice (10 ; 22) vers une entité réceptrice (11 ; 23),
procédé dans lequel la redondance cryptographique est un code d'authentification de message (MAC) calculé à partir d'au moins un premier chiffrement, par une fonction de chiffrement (E) par bloc et à l'aide d'une clé (K), d'une combinaison (XOR) d'un vecteur d'initialisation (IV) et d'un premier bloc (M'₁) représentatif d'au moins une première partie de données du message,
la clé de chiffrement (K) et le vecteur d'initialisation (IV) ayant des valeurs stockées par les entités émettrice et réceptrice,
**caractérisé en ce que** la vérification par l'entité réceptrice de la redondance cryptographique accompagnant un message reçu comporte les étapes :
a) application à la redondance cryptographique (MAC) d'au moins un premier déchiffrement, par une fonction de déchiffrement (D) homologue de la fonction de chiffrement (E) et à l'aide de la clé (K),
b) combinaison (XOR) du résultat de ce premier déchiffrement à un premier bloc (M'ₙ) représentatif d'au moins une première partie de données du message reçu,
c) comparaison du résultat de la combinaison de l'étape b) à la valeur du vecteur d'initialisation stockée par l'entité réceptrice
d) et décision d'accepter le message reçu comme authentique et/ou intègre en cas d'identité des valeurs comparées à l'étape c).

2. Procédé selon la revendication 1, dans lequel le calcul du code d'authentification de message (MAC) comporte au moins un deuxième chiffrement, par la fonction de chiffrement (E) et à l'aide de la clé (K), d'une combinaison (XOR) du résultat du premier chiffrement et d'un deuxième bloc (M'₂) représentatif d'une deuxième partie de données du message,
**caractérisé en ce que** l'étape b) comporte en outre au moins les opérations :
b1) application, à la combinaison entre le résultat du premier déchiffrement et le premier bloc (M'ₙ), d'au moins un deuxième déchiffrement, par la fonction de déchiffrement (D) et à l'aide de la clé (K), et
b2) combinaison (XOR) du résultat de ce deuxième déchiffrement à un deuxième bloc (M'ₙ₋₁) représentatif d'au moins une deuxième partie de données du message reçu.

3. Procédé selon la revendication 2, dans lequel la fonction de chiffrement (E) est de longueur de bloc L,
et le calcul du code d'authentification de message (MAC) comporte :
- une transformation d'un message (M) à envoyer par ajout ou suppression de données pour que la taille du message transformé (M') soit égale à nL, n étant un entier supérieur ou égal à 2, choisi,
- un découpage du message transformé (M') en n blocs successifs de longueur L, selon une première succession choisie,
- un premier chiffrement d'une combinaison (XOR) entre le vecteur d'initialisation (IV) et un premier bloc (M'₁ ; M'₄) de ladite première succession, et
- au moins un chiffrement suivant de la combinaison (XOR) entre le résultat du premier chiffrement et un deuxième bloc (M'₂ ; M'₃) qui suit le premier bloc dans la première succession,
**caractérisé en ce que** les étapes a) et b) comportent :
- une transformation d'un message reçu (M) par ajout ou suppression de données pour que la taille du message transformé (M') soit égale à nL,
- un découpage du message transformé (M') en n blocs successifs de longueur L, selon une seconde succession choisie,
- une combinaison (XOR) entre un premier déchiffrement de la redondance cryptographique reçue (MAC) et un premier bloc (M'₁) de ladite seconde succession, et
- au moins un déchiffrement suivant de la combinaison (XOR) entre le résultat du premier déchiffrement et un deuxième bloc (M'₂) qui suit le premier bloc (M'₁) dans ladite seconde succession.

4. Procédé selon la revendication 3, dans lequel le calcul du code d'authentification de message (MAC) comporte :
- l'application au message à émettre (M) d'une complémentation à une longueur multiple de la longueur L pour obtenir un message transformé (M') constitué d'une concaténation de n blocs (M'₁, M'₂, M'₃, M'₄) chacun de longueur L, n étant un entier supérieur ou égal à 2, et
- l'application au message transformé (M') d'un chiffrement par bloc en mode CBC,
**caractérisé en ce que** le calcul du vecteur d'initialisation comporte :
- une complémentation du message reçu (M) à une longueur multiple de la longueur L pour obtenir un message transformé (M') constitué d'une concaténation de n blocs (M'₁, M'₂, M'₃, M'₄) chacun de longueur L, n étant un entier supérieur ou égal à 2, et
- un déchiffrement par bloc, en mode CBC, du message transformé (M').

5. Procédé selon l'une des revendications 3 et 4, **caractérisé en ce que**, pour le calcul du code d'authentification de message (MAC), ledit premier bloc (H(M)), dans la première succession, résulte de l'application au message (M) d'une fonction à sens unique.

6. Procédé selon la revendication 5, **caractérisé en ce que** le résultat de l'application de la fonction à sens unique est envoyé à destination de l'entité réceptrice, avec le message (M), sous la forme d'une concaténation (H(M)∥M):
- du résultat de l'application au message (M) de la fonction à sens unique, et
- dudit message (M).

7. Procédé selon l'une des revendications 5 et 6, **caractérisé en ce que** la fonction à sens unique est une fonction de hachage et le résultat de son application (H(M)) est de longueur supérieure ou égale à la longueur L.

8. Procédé selon l'une des revendications 3 à 7, dans lequel le message est susceptible d'être transmis par fragments, de l'entité émettrice à l'entité réceptrice,
**caractérisé en ce que** la première succession de blocs (M'₄, M'₃, M'₂, M'₁) et la seconde succession de blocs (M'₁, M'₂, M'₃, M'₄) sont inversées,
et **en ce que** l'entité réceptrice commence le calcul du vecteur d'initialisation dès réception d'un premier fragment de message.

9. Procédé selon l'une des revendications précédentes, **caractérisé en ce que** lesdites combinaisons comportent l'application de la fonction booléenne "*OU exclusif*" (XOR).

10. Procédé selon l'une des revendications précédentes, dans lequel le message à transmettre comporte des données confidentielles (CW) chiffrées, **caractérisé en ce que** la clé de déchiffrement (K) et/ou la fonction de déchiffrement (D) utilisées pour la vérification de la redondance cryptographique forment des moyens différents des moyens de déchiffrement des données confidentielles (CW).

11. Procédé selon l'une des revendications précédentes, **caractérisé en ce qu'**il est appliqué, en contexte de contrôle d'accès (CAS), notamment à des données télévisuelles, à la vérification de la redondance cryptographique accompagnant les messages de contrôle d'accès (ECM, EMM).

12. Procédé selon l'une des revendications 1 à 10, **caractérisé en ce qu'**il est appliqué, en contexte de gestion de droits numériques (DRM), notamment de contenus audio et/ou vidéo, à la vérification de la redondance cryptographique accompagnant les licences sur lesdits contenus (RO).

13. Entité réceptrice de messages (EMM, ECM ; RO) reçus chacun avec une redondance cryptographique (MAC), **caractérisée en ce qu'**elle comporte des moyens de vérification de la redondance cryptographique accompagnant un message reçu, conformément au procédé selon l'une des revendications précédentes.

14. Processeur de sécurité dans une entité réceptrice d'un système de contrôle d'accès (CAS), l'entité réceptrice recevant des messages (EMM, ECM) avec une redondance cryptographique (MAC), **caractérisée en ce que** le processeur de sécurité (13) comporte des moyens de vérification de la redondance cryptographique accompagnant un message reçu, conformément au procédé selon la revendication 11.

15. Programme informatique, destiné à être stocké en mémoire d'une entité réceptrice selon la revendication 13 ou d'un processeur de sécurité selon la revendication 14, **caractérisé en ce qu'**il comporte des instructions pour la mise en oeuvre du procédé selon l'une des revendications 1 à 12 lorsqu'elles sont exécutées par un processeur de ladite entité réceptrice ou dudit processeur de sécurité (13).

## Patentansprüche

1. Verfahren, das mittels Computermitteln ausgeführt wird, zum Überprüfen der Authentizität und/oder Integrität einer Nachricht (EMM, ECM; RO), die mit einer kryptographischen Redundanz (MAC) von einer Sendeeinheit (10; 22) zu einer Empfangseinheit (11; 23) übertragen wird,
Verfahren, wobei die kryptographische Redundanz ein Nachrichten-Authentifizierungscode (MAC) ist, der ausgehend von mindestens einer ersten Verschlüsselung, durch eine Verschlüsselungsfunktion (E) pro Block und unter Verwendung eines Schlüssels (K), einer Kombination (XOR) aus einem Initialisierungsvektor (IV) und einem ersten Blocks (M'₁), der für mindestens einen ersten Teil der Daten der Nachricht repräsentativ ist, berechnet wird,
wobei der Verschlüsselungsschlüssel (K) und der Initialisierungsvektor (IV) Werte aufweisen, die von der Sende- und Empfangseinheit gespeichert werden,
**dadurch gekennzeichnet, dass** die Überprüfung durch die Empfangseinheit der kryptographischen Redundanz, die einer empfangenen Nachricht zugeordnet ist, die folgende Schritte beinhaltet:
a) Anwenden mindestens einer ersten Entschlüsselung auf die kryptographische Redundanz (MAC) durch eine Entschlüsselungsfunktion (D), die homolog zur Verschlüsselungsfunktion (E) ist, und unter Verwendung des Schlüssels (K),
b) Kombinieren (XOR) des Ergebnisses dieser ersten Entschlüsselung mit einem ersten Block (M'ₙ), der für mindestens einen ersten Teil der Daten der empfangenen Nachricht repräsentativ ist,
c) Vergleich des Ergebnisses der Kombination aus Schritt b) mit dem Wert des Initialisierungsvektors, der von der Empfangseinheit gespeichert wird,
d) und Entscheidung, die empfangene Nachricht als authentisch und/oder integer zu akzeptieren, wenn die Werte im Vergleich zu Schritt c) identisch sind.

2. Verfahren nach Anspruch 1, wobei die Berechnung des Nachrichten-Authentifizierungscodes (MAC) mindestens eine zweite Verschlüsselung durch die Verschlüsselungsfunktion (E) und unter Verwendung des Schlüssels (K) einer Kombination (XOR) des Ergebnisses der ersten Verschlüsselung und eines zweiten Blocks (M'₂), der für einen zweiten Teil der Daten der Nachricht repräsentativ ist, umfasst, **dadurch gekennzeichnet, dass** der Schritt b) ferner mindestens die folgenden Operationen umfasst:
b1) Anwendung, auf die Kombination des Ergebnisses der ersten Entschlüsselung und des ersten Blocks (M'ₙ), von mindestens einer zweiten Entschlüsselung durch die Entschlüsselungsfunktion (D) und unter Verwendung des Schlüssels (K), und
b2) Kombination (XOR) des Ergebnisses dieser zweiten Entschlüsselung mit einem zweiten Block (M'ₙ₋₁), der für mindestens einen zweiten Teil der Daten der empfangenen Nachricht repräsentativ ist.

3. Verfahren nach Anspruch 2, wobei die Verschlüsselungsfunktion (E) die Blocklänge L aufweist,
und die Berechnung des Nachrichten-Authentifizierungscodes (MAC) umfasst:
- eine Transformation einer zu sendenden Nachricht (M) durch Hinzufügen oder Löschen von Daten, so dass die Größe der transformierten Nachricht (M') gleich nL ist, wobei n eine ganze Zahl größer oder gleich 2 ist, ausgewählt,
- eine Teilung der transformierten Nachricht (M') in n aufeinanderfolgende Blöcke der Länge L, gemäß einer ersten gewählten Folge,
- eine erste Verschlüsselung einer Kombination (XOR) zwischen dem Initialisierungsvektor (IV) und einem ersten Block (M'₁; M'₄) der ersten Folge, und
- mindestens eine nächste Verschlüsselung der Kombination (XOR) zwischen dem Ergebnis der ersten Verschlüsselung und einem zweiten Block (M'₂; M'₃), der dem ersten Block in der ersten Folge folgt,
**dadurch gekennzeichnet, dass** die Schritte a) und b) Folgendes beinhalten:
- eine Transformation einer empfangenen Nachricht (M) durch Hinzufügen oder Löschen von Daten, so dass die Größe der transformierten Nachricht (M') gleich nL ist,
- eine Teilung der transformierten Nachricht (M') in n aufeinanderfolgende Blöcke der Länge L, gemäß einer zweiten gewählten Folge,
- eine Kombination (XOR) zwischen einer ersten Entschlüsselung der empfangenen kryptographischen Redundanz (MAC) und einem ersten Block (M'₁) der zweiten Folge, und
- mindestens eine nächste Entschlüsselung der Kombination (XOR) zwischen dem Ergebnis der ersten Entschlüsselung und einem zweiten Block (M'₂), der dem ersten Block (M'₁) in der zweiten Folge folgt.

4. Verfahren nach Anspruch 3, wobei die Berechnung des Nachrichten-Authentifizierungscodes (MAC) umfasst:
- die Anwendung einer Komplementierung auf eine Länge, die ein Vielfaches der Länge L ist, auf die zu übertragende Nachricht (M), um eine transformierte Nachricht (M') zu erhalten, die aus einer Verkettung von n Blöcken (M'₁, M'₂, M'₃, M'₄) jeweils mit einer Länge L besteht, wobei n eine ganze Zahl größer oder gleich 2 ist, und
- die Anwendung auf die transformierte Nachricht (M') einer Verschlüsselung pro Block im CBC-Modus, **dadurch gekennzeichnet, dass** die Berechnung des Initialisierungsvektors umfasst:
- eine Komplementierung der empfangenen Nachricht (M) auf eine Länge, die ein Vielfaches der Länge L ist, um eine transformierte Nachricht (M') zu erhalten, die aus einer Verkettung von n Blöcken (M'₁, M'₂, M'₃, M'₄) jeweils mit der Länge L besteht, wobei n eine ganze Zahl größer als oder gleich 2 ist, und
- eine Entschlüsselung pro Block der transformierten Nachricht (M') im CBC-Modus.

5. Verfahren nach einem der Ansprüche 3 und 4, **dadurch gekennzeichnet, dass** zur Berechnung des Nachrichten-Authentifizierungscodes (MAC) der erste Block (H(M)) in der ersten Folge aus der Anwendung einer Einweg-Funktion auf die Nachricht (M) resultiert.

6. Verfahren nach Anspruch 5, **dadurch gekennzeichnet, dass** das Ergebnis der Anwendung der Einwegfunktion an die Empfangseinheit gesendet wird mit der Nachricht (M) in Form einer Verkettung (H(M)∥M):
- des Ergebnisses der Anwendung auf die Nachricht (M) der Einwegfunktion, und
- der Nachricht (M).

7. Verfahren nach einem der Ansprüche 5 und 6, **dadurch gekennzeichnet, dass** die Einwegfunktion eine Hash-Funktion ist und das Ergebnis ihrer Anwendung (H(M)) eine Länge größer oder gleich die Länge L aufweist.

8. Verfahren nach einem der Ansprüche 3 bis 7, wobei die Nachricht in Fragmenten von der Sendeeinheit an die Empfangseinheit übertragen werden kann,
**dadurch gekennzeichnet, dass** die erste Folge von Blöcken (M'₄, M'₃, M'₂, M'₁) und die zweite Folge von Blöcken (M'₁, M'₂, M'₃, M'₄) invertiert werden,
und dass die Empfangseinheit die Berechnung des Initialisierungsvektors ab Erhalt eines ersten Nachrichtenfragments beginnt.

9. Verfahren nach einem der vorhergehenden Ansprüche, **dadurch gekennzeichnet, dass** die Kombinationen die Anwendung der Booleschen Funktion "*ausschließendes Oder*" (XOR) beinhalten.

10. Verfahren nach einem der vorhergehenden Ansprüche, wobei die zu übertragende Nachricht verschlüsselte vertrauliche Daten (CW) enthält, **dadurch gekennzeichnet, dass** der Entschlüsselungsschlüssel (K.) und/oder die Entschlüsselungsfunktion (D), die zur Überprüfung der kryptographischen Redundanz verwendet werden, Mittel bilden, die sich von Mitteln zur Entschlüsselung vertraulicher Daten (CW) unterscheiden.

11. Verfahren nach einem der vorhergehenden Ansprüche, **dadurch gekennzeichnet, dass** er im Rahmen der Kontrolle des Zugangs (CAS), insbesondere auf Fernsehdaten, auf die Überprüfung der kryptographischen Redundanz, die den Zugangskontrollnachrichten (ECM, EMM) zugeordnet ist, angewendet wird.

12. Verfahren nach einem der Ansprüche 1 bis 10, **dadurch gekennzeichnet, dass** er im Rahmen der Verwaltung digitaler Rechte (DRM), insbesondere von Audio- und/oder Videoinhalten, auf die Überprüfung der kryptographischen Redundanz, die den Lizenzen für diese Inhalte (RO) zugeordnet ist, angewendet wird.

13. Einheit zum Empfangen von Nachrichten (EMM, ECM; RO), die jeweils mit einer kryptographischen Redundanz (MAC) empfangen werden, **dadurch gekennzeichnet, dass** sie Mittel zum Überprüfen der kryptographischen Redundanz, die einer empfangenen Nachricht zugeordnet ist, gemäß dem Verfahren nach einem der vorherigen Ansprüche umfasst.

14. Sicherheitsprozessor in einer Empfangseinheit eines Systems zur Kontrolle des Zugangs (CAS), wobei die Empfangseinheit Nachrichten (EMM, ECM) mit einer kryptographischen Redundanz (MAC) empfängt, **dadurch gekennzeichnet, dass** der Sicherheitsprozessor (13) Mittel zum Überprüfen der kryptographischen Redundanz, die einer empfangenen Nachricht zugeordnet ist, gemäß dem Verfahren nach Anspruch 11 umfasst.

15. Computerprogramm, das dazu bestimmt ist, im Speicher einer Empfangseinheit nach Anspruch 13 oder eines Sicherheitsprozessors nach Anspruch 14 gespeichert zu werden, **dadurch gekennzeichnet, dass** es Anweisungen zur Durchführung des Verfahrens nach einem der Ansprüche 1 bis 12 enthält, wenn sie von einem Prozessor der Empfangseinheit oder des Sicherheitsprozessors (13) ausgeführt werden.

## Claims

1. A method, performed by computer means, for verifying the authenticity and/or the integrity of a transmitted message (EMM, ECM; RO), with a cryptographic redundancy (MAC), from an emitting entity (10; 22) to a receiving entity (11; 23),
method wherein the cryptographic redundancy is a message authentication code (MAC) calculated from at least a first encryption, by a block encryption function (E) and using a key (K), a combination (XOR) of an initialisation vector (IV) and a first block (M'₁), representing at least a first portion of data from the message,
the encryption key (K) and the initialisation vector (IV) having values which are stored by the emitting and receiving entities,
**characterised in that** verifying, by the receiving entity, the cryptographic redundancy associated with a received message includes the following steps:
a) applying to the cryptographic redundancy (MAC) at least a first decryption, by a decryption function (D) homologous with the encryption function (E) and using the key (K),
b) combining (XOR) the result of this first decryption to a first block (M'ₙ) representing at least a first portion of data from the received message,
c) comparing the result of the combination in step b) to the value of the initialisation vector stored by the receiving entity,
d) and deciding to accept the message received as authentic and/or integral in case of identity of the values compared in step c).

2. The method according to Claim 1, wherein calculating the message authentication code (MAC) includes at least a second encryption, by the encryption function (E) and using the key (K), of a combination (XOR) of the result of the first encryption with a second block (M'₂) representing a second portion of data from the message,
**characterised in that** step b) further includes at least the following operations:
a) applying, to the combination between the result of the first decryption and the first block (M'ₙ), at least a second decryption, by the decryption function (D) and using the key (K), and
b) combining (XOR) the result of the second decryption with a second block (M'ₙ₋₁) representing at least a second portion of data from the received message.

3. The method according to Claim 2, wherein the encryption function (E) has a block length L,
and calculating the message authentication code (MAC) includes:
- transforming a message (M) to send by adding or removing data so that the size of the transformed message (M') is equal to nL, n being a chosen integral higher than or equal to 2,
- splitting the transformed message (M') into n successive blocks of length L, according to a first chosen succession,
- a first encryption of a combination (XOR) between the initialisation vector (IV) and a first block (M'₁; M'₄) of the first succession, and
- at least one following encryption of the combination (XOR) between the result of the first encryption and a second block (M'₂; M'₃) which follows the first block in the first succession,
**characterised in that** steps a) and b) include:
- transforming a received message (M) by adding or removing the data so that the size of the transformed message (M') is equal to nL,
- splitting the transformed message (M') into n successive blocks of length L, according to a second chosen succession,
- combining (XOR) a first decryption of the received cryptographic redundancy (MAC) with a first block (M'₁) of said second succession, and
- at least one following decryption of the combination (XOR) between the result of the first decryption and a second block (M'₂) which follows the first block (M'₁) in said second succession.

4. The method according to Claim 3, wherein calculating the message authentication code (MAC) includes:
- applying to the message to emit (M) a complementation to a length which is a multiple of the length L to obtain a transformed message (M') consisting of a concatenation of n blocks (M'₁, M'₂, M'₃, M'₄) each having a length L, n being an integral higher than or equal to 2, and
- applying to the transformed message (M') a block encryption in CBC mode,
**characterised in that** calculating the initialisation vector includes:
- complementing the received message (M) to a length which is a multiple of the length L to obtain a transformed message (M') consisting of a concatenation of n blocks (M'₁, M'₂, M'₃, M'₄) each having a length L, n being an integral higher than or equal to 2, and
- a block decryption, in CBC mode, of the transformed message (M').

5. The method according to one of Claims 3 and 4, **characterised in that**, for calculating the message authentication code (MAC), said first block (H(M)), in the first succession, results from the application to the message (M) of a one-way function.

6. The method according to Claim 5, **characterised in that** the result of the application of the one-way function is sent to the receiving entity, with the message (M), in the form of a concatenation (H(M)∥M):
- of the result from applying to the message (M) the one-way function, and
- of said message (M).

7. The method according to one of Claims 5 and 6, **characterised in that** the one-way function is a hash function and the result of its application (H(M)) has a length larger than or equal to the length L.

8. The method according to one of Claims 3 to 7, wherein the message is likely to be transmitted in fragments, from the imaging entity to the receiving entity, **characterised in that** the first block succession (M'₄, M'₃, M'₂, M'₁) and the second block succession (M'₁, M'₂, M'₃, M'₄) are reversed,
and **in that** the receiving entity starts the calculation of the initialisation vector upon reception of a first message fragment.

9. The method according to one of the previous claims, **characterised in that** said combinations include the application of the "exclusive or" Boolean function (XOR).

10. The method according to one of the previous claims, wherein the message to transmit includes encrypted confidential data (CW), **characterised in that** the decryption key (K) and/or the decryption function (D) used for verifying the cryptographic redundancy form means which are different from the decryption means of the confidential data (CW).

11. The method according to one of the previous claims, **characterised in that** it is applied, in case of an access control (CAS), in particular to televisual data, to the verification of the cryptographic redundancy associated with the access control messages (ECM, EMM).

12. The method according to one of Claims 1 to 10, **characterised in that** it is applied, in case of digital rights management (DRM), in particular of audio and/or video contents, to the verification of the cryptographic redundancy associated with the licences on said contents (RO).

13. A receiving entity of messages (EMM, ECM; RO) each received with a cryptographic redundancy (MAC), **characterised in that** it includes means for verifying the cryptographic redundancy associated with a received message, in compliance with the method according to one of the previous claims.

14. A security processor in a receiving entity of an access control system (CAS), the receiving entity receiving messages (EMM, ECM) with a cryptographic redundancy (MAC), **characterised in that** the security processor (13) includes means for verifying the cryptographic redundancy associated with a received message, in compliance with the method according to Claim 11.

15. A computer program, for storing into memory a receiving entity according to Claim 13 or a security processor according to Claim 14, **characterised in that** it includes instructions for performing the method according to one of Claims 1 to 12 when they are executed by a processor of said receiving entity or said security processor (13).
